(19)

Europäisches Patentamt

European Patent Office

Office européen des brevets

(11) **EP 2 890 639 B1**

(12) **FASCICULE DE BREVET EUROPEEN**

(45) Date de publication et mention de la délivrance du brevet:
**17.07.2019 Bulletin 2019/29**

(21) Numéro de dépôt: **13759478.4**

(22) Date de dépôt: **02.09.2013**

(51) Int Cl.:
**C01B 33/193** *(2006.01)* **C01B 33/12** *(2006.01)*
**C08K 3/36** *(2006.01)* **C08K 5/092** *(2006.01)*

(86) Numéro de dépôt international:
**PCT/EP2013/068108**

(87) Numéro de publication internationale:
**WO 2014/033303 (06.03.2014 Gazette 2014/10)**

(54) **NOUVEAU PROCEDE DE PREPARATION DE SILICES PRECIPITEES**

NEUARTIGES VERFAHREN ZUR HERSTELLUNG VON FÄLLUNGSKIESELSÄUREN

NOVEL METHOD FOR PREPARING PRECIPITATED SILICAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2012 FR 1202350**

(43) Date de publication de la demande:
**08.07.2015 Bulletin 2015/28**

(73) Titulaire: **Rhodia Operations**
**75009 Paris 09 (FR)**

(72) Inventeurs:
- **BOIVIN, Cédric**
  **F-69250 Neuville Sur Saone (FR)**
- **GUY, Laurent**
  **F-69140 Rillieux-la-Pape (FR)**
- **PERIN, Eric**
  **F-68400 Villefranche Sur Saone (FR)**
- **LAMIRI, Kilani**
  **F-69210 L'arbresle (FR)**

(56) Documents cités:
**EP-A1- 0 735 088 EP-A1- 1 674 520**
**WO-A1-96/30303 WO-A1-02/051750**
**FR-A1- 2 886 285 US-A- 5 800 608**

EP 2 890 639 B1

**Description**

La présente invention concerne un nouveau procédé de préparation de silice précipitée.

La présente invention propose tout d'abord un nouveau procédé de préparation de silice précipitée mettant en oeuvre, au cours de ou après l'opération de délitage, un acide polycarboxylique particulier.

De manière générale, la préparation de silice précipitée s'effectue par réaction de précipitation d'un silicate, tel qu'un silicate de métal alcalin (silicate de sodium par exemple), avec un agent acidifiant (acide sulfurique par exemple), puis séparation par filtration, avec obtention d'un gâteau de filtration, de la silice précipitée obtenue, ensuite délitage dudit gâteau de filtration et enfin séchage (généralement par atomisation). Le mode de précipitation de la silice peut être quelconque : notamment, addition d'agent acidifiant sur un pied de cuve de silicate, addition simultanée totale ou partielle d'agent acidifiant et de silicate sur un pied de cuve d'eau ou de silicate.

FR2886285A1 décrit l'utilisation d'acide carboxylique lors de la préparation de silice précipitée, en particulier à faible reprise en eau, utilisable notamment comme charge renforçante, dans de matrices silicones. EP735088A1 décrit un procédé pour la préparation d'une silice précipitée «dopèe» à l'aluminium.

L'objet de l'invention est un nouveau procédé de préparation d'une silice précipitée, dans lequel :

- on fait réagir au moins un silicate avec au moins un agent acidifiant, de manière à obtenir une suspension de silice précipitée,
- on filtre la suspension de silice précipitée obtenue, de manière à obtenir un gâteau de filtration,
- on soumet le gâteau de filtration, obtenu à l'issue de la filtration, à une opération de délitage comprenant l'addition d'un composé de l'aluminium,
- après l'opération de délitage, on procède de préférence à une étape de séchage (généralement par atomisation), caractérisé en ce qu'on ajoute au gâteau de filtration, de l'acide succinique après l'addition du composé d'aluminium.

Selon l'invention, avantageusement l'acide succinique est, de manière préférée, utilisé sans ajout supplémentaire d'un autre acide (poly)carboxylique

L'opération de délitage est une opération de fluidification ou liquéfaction, dans laquelle le gâteau de filtration est rendu liquide, la silice précipitée se retrouvant en suspension.

Dans l'invention, cette opération est réalisée en soumettant le gâteau de filtration à une action chimique par addition d'un composé de l'aluminium, par exemple de l'aluminate de sodium, de préférence couplée à une action mécanique (par exemple par passage dans un bac agité en continu ou dans un broyeur de type colloïdal) qui induit habituellement une réduction granulométrique de la silice en suspension.

Dans une première variante, au cours de l'opération de délitage, le composé d'aluminium est ajouté au gâteau de filtration préalablement à l'ajout de l'acide succinique.

Dans une seconde variante (préférée), l'acide succinique est ajouté après l'opération de délitage, c'est-à-dire au gâteau de filtration délité.

Le mélange alors obtenu (suspension de silice précipitée) est ensuite séché (généralement par atomisation).

Le gâteau de filtration devant être soumis à l'opération de délitage peut être composé du mélange de plusieurs gâteaux de filtration, chacun desdits gâteaux étant obtenu par filtration d'une partie de la suspension de silice précipitée obtenue préalablement.

L'acide polycarboxylique utilisé dans le procédé selon l'invention est l'acide succinique.

L'acide succinique employé selon l'invention peut être sous forme d'anhydride, d'ester, de sel (carboxylate) de métal alcalin (par exemple de sodium ou de potassium) ou de sel (carboxylate) d'ammonium.

L'acide succinique utilisé dans l'invention peut éventuellement être préneutralisé (notamment en le prétraitant avec une base, par exemple de type soude ou potasse) avant son ajout au gâteau de filtration. Cela permet notamment de modifier le pH de la silice obtenue.

L'acide succinique, peut être employé sous forme de solution aqueuse.

De préférence, le composé de l'aluminium est choisi parmi les aluminates de métal alcalin. En particulier, le composé de l'aluminium est l'aluminate de sodium.

Selon l'invention, la quantité de composé de l'aluminium (en particulier l'aluminate de sodium) utilisé est généralement telle que le rapport composé de l'aluminium / quantité de silice exprimée en $SiO_2$ contenue dans le gâteau de filtration est compris entre 0,20 et 0,50 % en poids, de préférence entre 0,25 et 0,45 % en poids.

La quantité d'acide polycarboxylique employée est en général telle que le rapport acide polycarboxylique / quantité de silice exprimée en $SiO_2$ contenue dans le gâteau de filtration (au moment de l'ajout de l'acide polycarboxylique) est compris entre 0,75 et 2 % en poids, de préférence entre 1 et 1,75 % en poids, en particulier entre 1,1 et 1,5 % en poids.

Dans l'invention, le gâteau de filtration peut éventuellement être lavé.

La silice précipitée ainsi obtenue après l'ajout de l'acide succinique à la suspension de silice obtenue après l'opération de délitage est ensuite séchée. Ce séchage peut se faire par tout moyen connu en soi.

De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques.

A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice susceptible d'être alors obtenue peut se présenter sous la forme d'une poudre.

Enfin, le produit séché (notamment par atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que l'eau, suspension de silice...), une extrusion ou, de préférence, un compactage à sec. Lorsqu'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

La présente invention a également pour objet un procédé particulier de préparation d'une silice précipitée, du type comprenant la réaction de précipitation entre un silicate et un agent acidifiant ce par quoi l'on obtient une suspension de silice précipitée, puis la séparation et le séchage de cette suspension, caractérisé en ce qu'il comprend les étapes successives suivantes :

- on réalise la réaction de précipitation de la manière suivante :

  (i) on forme un pied de cuve initial comportant au moins une partie de la quantité totale du silicate engagé dans la réaction et un électrolyte, la concentration en silicate (exprimée en $SiO_2$) dans ledit pied de cuve initial étant inférieure à 100 g/l et, de préférence, la concentration en électrolyte dans ledit pied de cuve initial étant inférieure à 19 g/l,
  (ii) on ajoute l'agent acidifiant audit pied de cuve jusqu'à l'obtention d'une valeur de pH du milieu réactionnel d'au moins 7,0, en particulier comprise entre 7 et 8,5,
  (iii) on ajoute au milieu réactionnel de l'agent acidifiant, et, le cas échéant, simultanément la quantité restante du silicate,

- on filtre la suspension de silice obtenue,
- on soumet le gâteau de filtration obtenu à l'issue de la filtration à une opération de délitage comprenant l'addition d'un composé de l'aluminium,
- on sèche le gâteau de filtration ainsi obtenu, de préférence présentant un taux de matière sèche d'au plus 25 % en poids,

  ledit procédé étant caractérisé en ce qu'on ajoute au gâteau de filtration, soit au cours de l'opération de délitage après l'addition du composé d'aluminium, soit après l'opération de délitage et avant l'étape de séchage, de l'acide succinique.

Ce qui est indiqué dans l'exposé ci-dessus au sujet de l'opération de délitage, de l'addition de l'acide succinique et des deux variantes du procédé s'applique au présent procédé selon l'invention.

Le choix de l'agent acidifiant et du silicate se fait d'une manière bien connue en soi.

On utilise généralement comme agent acidifiant un acide minéral fort tel que l'acide sulfurique, l'acide nitrique ou l'acide chlorhydrique ou encore un acide organique tel que l'acide acétique, l'acide formique, l'acide carbonique.

L'agent acidifiant peut être dilué ou concentré ; sa normalité peut être comprise entre 0,4 et 36 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut utiliser en tant que silicate toute forme courante de silicates tels que les métasilicates, disilicates et avantageusement un silicate de métal alcalin notamment le silicate de sodium ou de potassium.

Le silicate peut présenter une concentration (exprimée en $SiO_2$) comprise entre 40 et 330 g/l, par exemple entre 60 et 300 g/l.

De manière préférée, on emploie, comme silicate, le silicate de sodium.

Dans le cas ou l'on utilise le silicate de sodium, celui-ci présente, en général, un rapport pondéral $SiO_2/Na_2O$

compris entre 2 et 4, en particulier entre 2,4 et 3,9, par exemple entre 3,1 et 3,8.

On forme lors de l'étape (i) un pied de cuve qui comprend du silicate ainsi qu'un électrolyte. La quantité de silicate présente dans le pied de cuve initial ne représente avantageusement qu'une partie de la quantité totale de silicate engagée dans la réaction.

En ce qui concerne l'électrolyte contenu dans le pied de cuve initial (étape (i)), ce terme s'entend ici dans son acceptation normale, c'est-à-dire qu'il signifie toute substance ionique ou moléculaire qui, lorsqu'elle est en solution, se décompose ou se dissocie pour former des ions ou des particules chargées ; on peut citer comme électrolyte un sel du groupe des métaux alcalins et alcalino-terreux, notamment le sel du métal de silicate de départ et de l'agent acidifiant, par exemple le chlorure de sodium dans le cas de la réaction d'un silicate de sodium avec de l'acide chlorhydrique ou, de préférence, le sulfate de sodium dans le cas de la réaction d'un silicate de sodium avec de l'acide sulfurique.

Selon une caractéristique de ce procédé de préparation, la concentration en électrolyte dans le pied de cuve initiale est inférieure à 19 g/l, en particulier inférieure à 18 g/l, notamment inférieure à 17 g/l, par exemple inférieure à 15 g/l (tout en étant le plus souvent supérieure à 6 g/l).

Selon une autre caractéristique de ce procédé, la concentration en silicate (exprimée en $SiO_2$) dans le pied de cuve initial est inférieure à 100 g/l. De préférence, cette concentration est inférieure à 80 g/l, notamment à 70 g/l. En particulier, lorsque l'acide utilisé pour la neutralisation présente une concentration élevée, notamment supérieure à 70 %, il convient alors de travailler avec un pied de cuve initial de silicate dont la concentration en $SiO_2$ est inférieure à 80 g/l.

L'addition d'agent acidifiant dans l'étape (ii) entraîne une baisse corrélative du pH du milieu réactionnel et se fait jusqu'à ce qu'on atteigne une valeur du pH du milieu réactionnel d'au moins 7, en particulier comprise entre 7 et 8,5, par exemple comprise entre 7,5 et 8,5.

Une fois atteinte la valeur souhaitée de pH, et dans le cas d'un pied de cuve de départ ne comprenant qu'une partie de la quantité totale du silicate engagé, on procède alors avantageusement à une addition simultanée d'agent acidifiant et de la quantité restante de silicate dans l'étape (iii).

Cette addition simultanée est généralement réalisée de manière telle que la valeur du pH du milieu réactionnel soit constamment égale (à ± 0,1 près) à celle atteinte à l'issue de l'étape (ii).

Il peut être procédé à l'issue de l'étape (iii) et notamment après l'addition simultanée précitée, à un mûrissement du milieu réactionnel (suspension aqueuse) obtenu, au pH obtenu à l'issue de l'étape (iii), et en général sous agitation, par exemple pendant 2 à 45 minutes, en particulier pendant 3 à 30 minutes.

Il est enfin possible, aussi bien dans le cas d'un pied de cuve de départ ne comprenant qu'une partie de la quantité totale de silicate engagé que dans le cas d'un pied de cuve de départ comprenant la quantité totale de silicate engagé, après la précipitation, dans une étape ultérieure éventuelle, d'ajouter au milieu réactionnel une quantité supplémentaire d'agent acidifiant. Cette addition se fait généralement jusqu'à l'obtention d'une valeur de pH compris entre 3 et 6,5, de préférence entre 4 et 6,5.

La température du milieu réactionnel est généralement comprise entre 75 et 97 °C, de préférence entre 80 et 96 °C.

Selon une variante de ce procédé de préparation, la réaction est effectuée à une température constante comprise entre 75 et 97 °C. Selon une autre variante de ce procédé, la température de fin de réaction est plus élevée que la température de début de réaction : ainsi, on maintient la température au début de la réaction de préférence entre 75 et 90 °C ; puis, on augmente la température en quelques minutes de préférence jusqu'à une valeur comprise entre 90 et 97 °C à laquelle elle est maintenue jusqu'à la fin de la réaction.

On obtient, à l'issue des étapes qui viennent d'être décrites, une bouillie de silice qui est ensuite séparée (séparation liquide-solide). Cette séparation comporte habituellement une filtration, suivie d'un lavage si nécessaire, effectuée au moyen de toute méthode convenable, par exemple au moyen d'un filtre à bande, d'un filtre sous vide ou, de préférence, d'un filtre presse.

Le gâteau de filtration est alors soumis à une opération de délitage comprenant l'addition d'un composé de l'aluminium.

Conformément à l'exposé ci-dessus, on ajoute de l'acide succinique, au cours de l'opération de délitage après l'addition du composé d'aluminium ou après l'opération de délitage et avant l'étape de séchage, au gâteau de filtration délité. Selon la variante préférée, l'acide succinique est ajouté après l'opération de délitage au gâteau de filtration délité.

Le gâteau de filtration ainsi obtenu est ensuite séché.

De préférence, dans ce procédé de préparation, la suspension de silice précipitée obtenue après l'opération de délitage doit présenter immédiatement avant son séchage un taux de matière sèche d'au plus 25 % en poids, notamment d'au plus 24 % en poids, en particulier d'au plus 23 % en poids, par exemple d'au plus 22 % en poids.

Ce séchage peut se faire selon tout moyen connu en soi. De préférence, le séchage se fait par atomisation. A cet effet, on peut utiliser tout type d'atomiseur convenable, notamment un atomiseur à turbines, à buses, à pression liquide ou à deux fluides. En général, lorsque la filtration est effectuée à l'aide d'un filtre presse, on utilise un atomiseur à buses, et, lorsque la filtration est effectuée à l'aide d'un filtre sous-vide, on utilise un atomiseur à turbines.

Lorsque le séchage est effectué à l'aide d'un atomiseur à buses, la silice précipitée susceptible d'être alors obtenue se présente habituellement sous forme de billes sensiblement sphériques. A l'issue de ce séchage, on peut éventuellement procéder à une étape de broyage sur le produit récupéré ; la silice précipitée susceptible d'être alors obtenue se présente généralement sous forme d'une poudre.

Lorsque le séchage est effectué à l'aide d'un atomiseur à turbines, la silice précipitée susceptible d'être alors obtenue peut se présenter sous la forme d'une poudre.

Enfin, le produit séché (notamment par un atomiseur à turbines) ou broyé tel qu'indiqué précédemment peut éventuellement être soumis à une étape d'agglomération, qui consiste par exemple en une compression directe, une granulation voie humide (c'est-à-dire avec utilisation d'un liant tel que eau, suspension de silice...), une extrusion ou, de préférence, un compactage à sec. Lorsqu'on met en oeuvre cette dernière technique, il peut s'avérer opportun, avant de procéder au compactage, de désaérer (opération appelée également pré-densification ou dégazage) les produits pulvérulents de manière à éliminer l'air inclus dans ceux-ci et assurer un compactage plus régulier.

La silice précipitée susceptible d'être alors obtenue par cette étape d'agglomération se présente généralement sous la forme de granulés.

Les silices précipitées obtenues ou susceptibles d'être obtenues par le procédé selon l'invention présentent en général à leur surface des molécules de l'acide polycarboxylique employé et/ou de carboxylate correspondant à l'acide polycarboxylique employé.

La silice précipitée obtenue par le procédé selon l'invention a des caractéristiques particulières, elle est notamment utilisable comme charge alternative pour les compositions de polymères leur procurant de manière avantageuse une réduction de leur viscosité et une amélioration de leurs propriétés dynamiques tout en conservant leurs propriétés mécaniques.

Dans l'exposé qui suit, la surface spécifique BET est déterminée selon la méthode de BRUNAUER - EMMET - TELLER décrite dans « The Journal of the American Chemical Society », Vol. 60, page 309, février 1938 et correspondant à la norme NF ISO 5794-1 annexe D (juin 2010). La surface spécifique CTAB est la surface externe, pouvant être déterminée selon la norme NF ISO 5794-1 annexe G (juin 2010).

La teneur en acide polycarboxylique + carboxylate correspondant notée (C), exprimée en carbone total, peut être mesurée à l'aide d'un analyseur carbone soufre comme l'Horiba EMIA 320 V2. Le principe de l'analyseur carbone soufre est basé sur la combustion d'un échantillon solide dans un flux d'oxygène dans un four à induction (réglé à environ 170 mA) et en présence d'accélérateurs de combustion (environ 2 grammes de tungstène (en particulier Lecocel 763-266) et environ 1 gramme de fer). L'analyse dure environ 1 minute.

Le carbone contenu dans l'échantillon à analyser (masse d'environ 0,2 gramme) se combine avec l'oxygène pour former $CO_2$, CO. On analyse ensuite ces gaz de décomposition par un détecteur infrarouge.

L'humidité de l'échantillon et l'eau produite lors de ces réactions d'oxydation est éliminée par passage sur une cartouche contenant un agent déshydratant : le perchlorate de magnésium afin de ne pas interférer sur la mesure infrarouge.

Le résultat est exprimé en pourcentage massique en élément Carbone.

La teneur en aluminium notée (Al) peut être déterminée par Fluorescence X dispersif en longueur d'onde par exemple avec un spectromètre Panalytical 2400 ou, de préférence, avec un spectromètre Panalytical MagixPro PW2540. Le principe de la méthode de mesure par Fluorescence X est le suivant :

- un broyage de la silice est nécessaire quand elle est se présente sous forme de billes sensiblement sphériques (microperles) ou de granulés, jusqu'à l'obtention d'une poudre homogène. Le broyage peut être réalisé avec un mortier en agate (broyage de 15 grammes de silice environ pendant une durée de 2 minutes) ou tout type de broyeur ne contenant pas d'aluminium,
- la poudre est analysée telle quelle dans une cuve de 40 mm de diamètre avec un film de polypropylène de 6 $\mu$m, sous atmosphère d'hélium, à un diamètre d'irradiation de 37 mm, et la quantité de silice analysée est de 9 cm$^3$. La mesure de la teneur en aluminium, qui nécessite au maximum 5 minutes, est obtenue à partir de la raie K$\alpha$ (angle $2\theta = 145°$, cristal PE002, collimateur 550 $\mu$m, détecteur flux gazeux, tube en rhodium, 32 kV et 125 mA). L'intensité de cette raie est proportionnelle à la teneur en aluminium. On peut employer un étalonnage préalable réalisé au moyen d'une autre méthode de mesure, telle que l'ICP-AES (" Inductively Coupled Plasma - Atomic Emission Spectroscopy ").

La teneur en aluminium peut également être mesurée par toute autre méthode convenable, par exemple par ICP-AES après mise en solution dans l'eau en présence d'acide fluorhydrique.

La présence d'acide(s) polycarboxylique(s) sous la forme acide et/ou sous la forme carboxylate peut être établie par Infrarouge de surface ou ATR-diamant (Attenuated Total Reflection).

L'analyse Infrarouge de surface (par transmission) est réalisée sur un spectromètre Bruker Equinoxe 55 sur une pastille de produit pur. La pastille est obtenue après broyage de la silice telle quelle dans un mortier en agate et pastillage à 2 T/cm$^2$ pendant 10 secondes. Le diamètre de la pastille est de 17 mm. Le poids de la pastille est entre 10 et 20 mg. La pastille ainsi obtenue est placée dans l'enceinte sous vide secondaire (10⁻⁷ mbar) du spectromètre pendant une heure à température ambiante avant l'analyse par transmission. L'acquisition a lieu sous vide secondaire (conditions d'acquisition : de 400 cm⁻¹ à 6000 cm⁻¹ ; nombre de scans : 100 ; résolution : 2 cm⁻¹).

L'analyse par ATR-diamant, réalisée sur un spectromètre Bruker Tensor 27, consiste à déposer sur le diamant une pointe de spatule de silice préalablement broyée dans un mortier en agate, puis à exercer une pression. Le spectre Infrarouge est enregistré sur le spectromètre en 20 scans, de 650 cm⁻¹ à 4000 cm⁻¹. La résolution est de 4 cm⁻¹.

Le rapport noté (R) est déterminé par la relation suivante :

$$(R) = N \times \frac{\left[\left(100 \times \frac{C}{C_{Theo}}\right) \times M_{Al}\right]}{\left(Al \times M_{Ac}\right)},$$

dans laquelle :

- $N$ est le nombre de fonction carboxylique de l'acide polycarboxylique (par exemple, N est égal à 2 dans le cas de l'acide succinique),
- (C) et (Al) sont les teneurs telles que définies ci-dessus,
- $C_T$ est la teneur en carbone de l'acide polycarboxylique,
- $M_{Al}$ est la masse moléculaire de l'aluminium,
- $M_{Ac}$ est la masse moléculaire de l'acide polycarboxylique.

La composante dispersive de l'énergie de surface $\gamma_s^d$ est déterminée par chromatographie gazeuse inverse. Un broyage de la silice est en général nécessaire quand elle se présente sous forme de granulés, suivi par un tamisage par exemple à 106 $\mu$m - 250 $\mu$m.

La technique utilisée pour calculer la composante dispersive de l'énergie de surface $\gamma_s^d$ est la Chromatographie Gazeuse Inverse à Dilution Infinie (CGI-DI), à 110°C en utilisant une série d'alcanes (normaux) allant de 6 à 10 atomes de carbone, une technique basée sur la chromatographie gazeuse, mais où le rôle de la phase mobile et de la phase stationnaire (remplissage) sont inversés. Ici, la phase stationnaire dans la colonne est remplacée par le matériau (solide) à analyser, ici la silice précipitée. Quant à la phase mobile, elle est constituée par le gaz vecteur (hélium) et des molécules "sondes" choisies en fonction de leur capacité d'interaction. Les mesures sont réalisées successivement avec chaque molécule sonde. Pour chaque mesure, chaque molécule sonde est injectée dans la colonne, en très faible quantité (dilution infinie), en mélange avec du méthane. Le méthane est utilisé pour déterminer le t0, le temps mort de la colonne.

La soustraction de ce temps mort t0 au temps de rétention de la sonde injectée conduit au temps de rétention net ($t_N$) de celle-ci.

Ces conditions opératoires, propres à la dilution infinie, font que ces temps de rétention reflètent uniquement l'interactivité de l'échantillon vis-à-vis de ces molécules. Physiquement, $t_N$ correspond au temps moyen que la molécule sonde a passé au contact de la phase stationnaire (le solide analysé). Pour chaque molécule sonde injectée, trois temps de rétention net $t_N$ sont mesurés. La valeur moyenne et l'écart-type correspondant sont utilisés pour déterminer les volumes de rétention spécifique ($V_g^0$) en s'appuyant sur la relation suivante (formule [1]).

$$V_g^0 = \frac{D_c t_N}{M_S} \cdot \frac{273,15}{T} \qquad \text{formule [1]}$$

Ce dernier correspond au volume de gaz vecteur (ramené à 0°C) nécessaire pour éluer la molécule sonde pour 1 gramme de phase stationnaire (solide examiné). Cette grandeur standard permet de comparer les résultats quel que soit le débit de gaz vecteur et la masse de phase stationnaire utilisée. La formule [1] fait appel à : $Ms$, la masse de solide dans la colonne, $Dc$ le débit de gaz vecteur et $T$ la température de mesure.

Le volume de rétention spécifique est ensuite utilisé pour accéder à $\Delta Ga$, la variation d'enthalpie libre d'adsorption de la sonde, selon la formule [2], avec R la constante universelle des gaz parfaits ($R$ = 8,314 J·K⁻¹·mol⁻¹), sur le solide contenu dans la colonne.

$$\Delta G_a = RT.Ln(V_g^0) \qquad \text{formule [2]}$$

Cette grandeur $\Delta Ga$ est le point de départ pour la détermination de la composante dispersive de l'énergie de

surface ($\gamma_s{}^d$). Celle-ci est obtenue en traçant la droite représentant la variation d'enthalpie libre d'adsorption ($\Delta Ga$) en fonction du nombre de carbone $n_c$ des sondes n-alcanes tel qu'indiqué dans le tableau ci-dessous.

| Sondes n-alcanes | $n_c$ |
|---|---|
| n-hexane | 6 |
| n-heptane | 7 |
| n-octane | 8 |
| n-nonane | 9 |
| n-décane | 10 |

On peut alors déterminer la composante dispersive de l'énergie de surface $\gamma_s{}^d$ à partir de la pente $\Delta Ga(CH2)$ de la droite des alcanes normaux, correspondant à l'enthalpie libre d'adsorption du groupe méthylène, obtenue pour une température de mesure de 110°C.

La composante dispersive de l'énergie de surface $\gamma_s{}^d$ est alors reliée à l'enthalpie libre d'adsorption $\Delta Ga(CH2)$ du groupe méthylène (méthode Dorris et Gray, J. Colloid Interface Sci., 77 (180), 353-362) par la relation suivante :

$$\gamma_S^d = \frac{(\Delta G_a^{CH_2})^2}{4N_A^2 . a_{CH_2}^2 . \gamma_{CH_2}}$$

Avec $N_A$ le nombre d'Avogadro ($6,02.10^{23}$ mol$^{-1}$), $a_{CH_2}$ l'aire occupée par un groupement méthylène adsorbée ($0,06$ nm$^2$) et $\gamma_{CH_2}$ l'énergie de surface d'un solide constitué uniquement de groupe méthylène et déterminée sur le polyéthylène ($35,6$ mJ/m$^2$ à 20 °C).

La coordinence de l'aluminium est déterminée par RMN solide de l'aluminium.

La technique utilisée pour mesurer la reprise en eau consiste généralement à placer, dans des conditions d'humidité relative données et pendant une durée prédéfinie, l'échantillon de silice préalablement séché ; la silice s'hydrate alors, ce qui fait passer la masse de l'échantillon d'une valeur initiale m (à l'état séché) à une valeur finale m + dm. On désigne spécifiquement par « reprise en eau » d'une silice, en particulier dans toute la suite de l'exposé, le rapport dm/m (c'est-à-dire la masse d'eau intégrée à l'échantillon rapportée à la masse de l'échantillon à l'état sec) exprimé en pourcentage calculé pour un échantillon de silice soumis aux conditions suivantes lors de la méthode de mesure :

- séchage préliminaire : 8 heures, à 150 °C ;
- hydratation : 24 heures, à 20 °C, et sous une humidité relative de 70 %.

Le protocole expérimental mis en oeuvre consiste à successivement :

- peser exactement environ 2 grammes de la silice à tester ;
- sécher pendant 8 heures la silice ainsi pesée dans une étuve réglée à une température de 105 °C ;
- déterminer la masse m de la silice obtenue à l'issue de ce séchage ;
- disposer pendant 24 heures, à 20 °C, la silice séchée dans un récipient fermé tel qu'un dessicateur contenant un mélange eau / glycérine, de façon à ce que l'humidité relative du milieu fermé soit de 70 % ;
- déterminer la masse (m + dm) de la silice obtenue suite à ce traitement de 24 heures à 70 % d'humidité relative, la mesure de cette masse étant effectuée immédiatement après avoir sorti la silice du dessicateur, de manière à éviter une variation de la masse de la silice sous l'influence du changement d'hygrométrie entre le milieu à 70 % d'humidité relative et l'atmosphère du laboratoire.

Les volumes poreux et diamètres de pores sont mesurés par porosimétrie au mercure (Hg), à l'aide d'un porosimètre MICROMERITICS Autopore 9520, et sont calculés par la relation de WASHBURN avec un angle de contact théta égal à 130° et une tension superficielle gamma égale à 484 Dynes/cm (norme DIN 66133). La préparation de chaque échantillon se fait comme suit : chaque échantillon est préalablement séché pendant 2 heures en étuve à 200 °C.

L'aptitude à la dispersion et à la désagglomération des silices peut être quantifiée au moyen du test spécifique de désagglomération ci-dessous.

On effectue une mesure granulométrique (par diffraction laser), sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC HELIOS/BF (équipé d'une lentille optique de type R3 (0,9 - 175 $\mu$m)), en mettant en oeuvre la théorie de Fraunhofer.

On introduit 2 grammes (+/- 0,1 gramme) de silice dans un bécher de 50 ml (hauteur : 7,5 cm et diamètre : 4,5 cm et l'on complète à 50 grammes par ajout de 48 grammes (+/- 0,1 gramme) d'eau permutée. On obtient ainsi une suspension aqueuse à 4 % de silice.

On procède ensuite à la désagglomération sous ultra-sons comme suit : on appuie sur le bouton « TIMER » du sonificateur et on ajuste le temps à 5 minutes et 30 secondes. On ajuste l'amplitude de la sonde (correspondant à la puissance nominale) à 80 %, puis la sonde à ultra-sons est plongée sur 5 centimètres dans la suspension de silice contenue dans le bécher. On allume alors la sonde à ultra-sons et la désagglomération est effectuée pendant 5 minutes et 30 secondes à 80 % d'amplitude de la sonde.

On réalise ensuite la mesure granulométrique en introduisant dans la cuve du granulomètre un volume V (exprimé en ml) de la suspension, ce volume V étant tel que l'on atteigne sur le granulomètre 8 % de densité optique.

Le diamètre médian $\varnothing_{50}$, après désagglomération aux ultra-sons, est tel que 50 % des particules en volume ont une taille inférieure à $\varnothing_{50}$ et 50 % ont une taille supérieure à $\varnothing_{50}$. La valeur du diamètre médian $\varnothing_{50}$ que l'on obtient est d'autant plus faible que la silice présente une aptitude à la désagglomération élevée.

On peut également déterminer le rapport (10 x V / densité optique de la suspension détectée par le granulomètre), cette densité optique correspondant à la valeur réelle détectée par le granulomètre lors de l'introduction de la silice.

Ce rapport (facteur de désagglomération $F_D$) est indicatif du taux de particules de taille inférieure à 0,1 $\mu$m qui ne sont pas détectées par le granulomètre. Ce rapport est d'autant plus élevé que la silice présente une aptitude à la désagglomération élevée.

Le pH est mesuré selon la méthode suivante dérivant de la norme ISO 787/9 (pH d'une suspension à 5 % dans l'eau) :

*Appareillage :*

- pHmètre étalonné (précision de lecture au 1/100$^e$)
- électrode de verre combinée
- bécher de 200 mL
- éprouvette de 100 mL
- balance de précision à 0,01 g près.

*Mode opératoire :*

5 grammes de silice sont pesées à 0,01 gramme près dans le bécher de 200 mL. 95 mL d'eau mesurés à partir de l'éprouvette graduée sont ensuite ajoutés à la poudre de silice. La suspension ainsi obtenue est agitée énergiquement (agitation magnétique) pendant 10 minutes. La mesure du pH est alors effectuée.

La silice précipitée obtenue par le procédé selon l'invention est caractérisée en ce qu'elle possède :

- une surface spécifique BET comprise entre 45 et 550 m$^2$/g, notamment entre 70 et 370 m$^2$/g, en particulier entre 80 et 300 m$^2$/g,
- une teneur (C) en acide polycarboxylique + carboxylate correspondant, exprimée en carbone total, d'au moins 0,15 % en poids, notamment d'au moins 0,20 % en poids,
- une teneur en aluminium (Al) d'au moins 0,20 % en poids, notamment d'au moins 0,25 % en poids.

La silice précipitée obtenue par le procédé selon l'invention peut notamment présenter une surface spécifique BET comprise entre 100 et 240 m$^2$/g, en particulier entre 120 et 190 m$^2$/g, par exemple entre 130 et 170 m$^2$/g.

La silice précipitée obtenue par le procédé selon l'invention peut notamment présenter une teneur (C) en acide polycarboxylique + carboxylate correspondant, exprimée en carbone total, d'au moins 0,25 % en poids, en particulier d'au moins 0,30 % en poids, par exemple d'au moins 0,35 % en poids, voire d'au moins 0,45 % en poids.

La silice précipitée obtenue par le procédé conforme à l'invention peut notamment présenter une teneur en aluminium (Al) d'au moins 0,30 % en poids, en particulier d'au moins 0,33 % en poids. Elle présente généralement une teneur en aluminium (Al) inférieure à 1 % en poids, en particulier d'au plus 0,50 % en poids, par exemple d'au plus 0,45 % en poids.

La présence des acides polycarboxyliques et/ou des carboxylates correspondants aux acides polycarboxyliques à la surface de la silice peut être illustrée par la présence d'épaulements caractéristiques des liaisons C-O et C=O, visibles sur les spectres Infrarouge, obtenus notamment par Infrarouge de surface (transmission) ou ATR-diamant (en particulier entre 1540 et 1590 cm$^{-1}$ et entre 1380 et 1420 cm$^{-1}$ pour C-O, et entre 1700 et 1750 cm$^{-1}$ pour C=O).

En général la silice précipitée obtenue par le procédé selon l'invention présente à sa surface des molécules d'acide succinique et/ou de carboxylate correspondant à l'acide succinique.

Par exemple, elle peut présenter à sa surface des molécules d'acide succinique sous forme acide et/ou sous forme carboxylate.

En général, la silice précipitée obtenue par le procédé selon l'invention possède une surface spécifique CTAB comprise entre 40 et 525 m$^2$/g, notamment entre 70 et 350 m$^2$/g, en particulier entre 80 et 310 m$^2$/g, par exemple entre 100 et 240 m$^2$/g. Elle peut être notamment comprise entre 130 et 200 m$^2$/g, par exemple entre 140 et 190 m$^2$/g.

En général, la silice précipitée obtenue par le procédé selon l'invention présente un rapport surface spécifique BET/surface spécifique CTAB compris entre 0,9 et 1,2, c'est-à-dire qu'elle présente une faible microporosité.

De préférence, la silice précipitée obtenue par le procédé selon l'invention possède un rapport (R) compris entre 0,4 et 3,5, notamment entre 0,4 et 2,5. Ce rapport (R) peut également être compris entre 0,5 et 3,5, notamment entre 0,5 et 2,5, en particulier compris entre 0,5 et 2, par exemple entre 0,8 et 2, voire entre 0,8 et 1,8 ou entre 0,8 et 1,6.

De préférence, la silice précipitée obtenue par le procédé selon l'invention présente une composante dispersive de l'énergie de surface $\gamma_s^d$ inférieure à 43 mJ/m$^2$, en particulier inférieure à 42 mJ/m$^2$.

Elle peut présenter une composante dispersive de l'énergie de surface $\gamma_s^d$ d'au moins 40 mJ/m$^2$ et inférieure à 43 mJ/m$^2$, en particulier comprise strictement entre 40 et 43 mJ/m$^2$, par exemple comprise strictement entre 40 et 42 mJ/m$^2$.

De manière préférée, elle présente une composante dispersive de l'énergie de surface $\gamma_s^d$ inférieure à 40 mJ/m$^2$, en particulier inférieure à 35 mJ/m$^2$.

La silice précipitée obtenue par le procédé selon l'invention peut posséder une répartition de la coordinence de l'aluminium spécifique, déterminée par RMN solide de l'aluminium. En général, au plus 85 % en nombre, notamment au plus 80 % en nombre, en particulier entre 70 et 85 % en nombre, par exemple entre 70 et 80 % en nombre, des atomes d'aluminium de la silice selon l'invention, peuvent présenter une coordinence tétraédrique, c'est-à-dire peuvent être en site tétraédrique. En particulier entre 15 et 30 % en nombre, par exemple entre 20 et 30 % en nombre, des atomes d'aluminium de la silice selon l'invention, peuvent présenter une coordinence pentaédrique et octaédrique, c'est-à-dire peuvent être en site pentaédrique ou octaédrique.

La silice précipitée obtenue par le procédé selon l'invention peut présenter une reprise en eau supérieure à 6 %, en particulier supérieure à 7 %, notamment supérieure à 7,5 %, par exemple supérieur à 8 %, voire supérieure à 8,5 %.

En général, la silice précipitée obtenue par le procédé selon l'invention présente une aptitude à la dispersion (notamment dans les élastomères) et à la désagglomération élevée.

La silice précipitée obtenue par le procédé selon l'invention peut présenter un diamètre $\emptyset_{50}$, après désagglomération aux ultra-sons d'au plus 5 $\mu$m, de préférence d'au plus 4 $\mu$m, notamment compris entre 3,5 et 2,5 $\mu$m.

La silice précipitée obtenue par le procédé selon l'invention peut présenter un facteur de désagglomération aux ultra-sons $F_D$ supérieur à 5,5 ml, en particulier supérieur à 7,5 ml, par exemple supérieur à 12 ml.

Un autre paramètre de la silice précipitée obtenue par le procédé selon l'invention peut résider dans la distribution, ou répartition, de son volume poreux, et notamment dans la distribution du volume poreux qui est généré par les pores de diamètres inférieurs ou égaux à 400 Å. Ce dernier volume correspond au volume poreux utile des charges employées dans le renforcement des élastomères. En général, l'analyse des porogrammes montre que cette silice, aussi bien sous forme de billes sensiblement sphériques (microperles), de poudre ou de granulés, possède de préférence une distribution poreuse telle que le volume poreux généré par les pores dont les diamètre est compris entre 175 et 275 Å (V2) représente au moins 50 %, en particulier au moins 55 %, notamment entre 55 et 65 %, par exemple entre 55 et 60 % du volume poreux généré par les pores de diamètres inférieurs ou égaux à 400 Å (V1). Lorsque la silice précipitée selon l'invention se présente sous forme de granulés, elle peut éventuellement posséder une distribution poreuse telle que le volume poreux généré par les pores dont les diamètre est compris entre 175 et 275 Å (V2) représente au moins 60 % du volume poreux généré par les pores de diamètres inférieurs ou égaux à 400 Å (V1).

La silice précipitée obtenue par le procédé selon l'invention présente, de préférence, un pH compris entre 3,5 et 7,5, de manière encore plus préférée entre 4 et 7, en particulier entre 4,5 et 6.

L'état physique dans lequel se présente la silice précipitée obtenue par le procédé selon l'invention peut être quelconque, c'est-à-dire qu'elle peut se présenter sous forme de billes sensiblement sphériques (microperles), de poudre ou de granulés.

Elle peut ainsi se présenter sous forme de billes sensiblement sphériques de taille moyenne d'au moins 80 $\mu$m, de préférence d'au moins 150 $\mu$m, en particulier comprise entre 150 et 270 $\mu$m ; cette taille moyenne est déterminée selon la norme NF X 11507 (décembre 1970) par tamisage à sec et détermination du diamètre correspondant à un refus cumulé de 50 %.

Elle peut également se présenter sous forme de poudre de taille moyenne d'au moins 3 $\mu$m, en particulier d'au moins 10 $\mu$m, de préférence d'au moins 15 $\mu$m.

Elle peut se présenter sous forme de granulés (en général de forme sensiblement parallélépipédique) de taille d'au moins 1 mm, par exemple comprise entre 1 et 10 mm, notamment selon l'axe de leur plus grande dimension.

De manière avantageuse, les silices précipitées obtenues par le procédé selon l'invention précédemment décrit confèrent aux compositions de polymère(s) (élastomère(s)), dans lesquelles elles sont introduites, un compromis de propriétés très satisfaisant, notamment une réduction de la viscosité et de préférence une amélioration de leurs propriétés dynamiques tout en conservant leurs propriétés mécaniques. Elles permettent ainsi de manière avantageuse une amélioration du compromis mise en oeuvre / renforcement / propriétés hystérétiques. De manière préférée, elles présentent une bonne aptitude à la dispersion et à la désagglomération dans les compositions de polymère(s) (élastomère(s)).

Les silices précipitées obtenues par le procédé selon l'invention précédemment décrit peuvent être utilisées dans de nombreuses applications.

Elles peuvent être employées par exemple comme support de catalyseur, comme absorbant de matières actives (en particulier support de liquides, notamment utilisés dans l'alimentation, tels que les vitamines (vitamine E), le chlorure de choline), dans des compositions de polymère(s), notamment d'élastomère(s), de silicone(s), comme agent viscosant, texturant ou anti-mottant, comme élément pour séparateurs de batteries, comme additif pour dentifrice, pour béton, pour papier.

Cependant, elles trouvent une application particulièrement intéressante dans le renforcement des polymères, naturels ou synthétiques.

Les compositions de polymère(s) dans lesquelles elles peuvent être employées, notamment à titre de charge renforçante, sont en général à base d'un ou plusieurs polymères ou copolymères (notamment bipolymères ou terpolymères), en particulier d'un ou plusieurs élastomères, présentant, de préférence, au moins une température de transition vitreuse comprise entre -150 et +300 °C, par exemple entre -150 et + 20 °C.

A titre de polymères possibles, on peut mentionner notamment les polymères diéniques, en particulier les élastomères diéniques.

Par exemple, on peut utiliser les polymères ou copolymères (notamment bipolymères ou terpolymères) dérivant de monomères aliphatiques ou aromatiques, comprenant au moins une insaturation (tels que, notamment, l'éthylène, le propylène, le butadiène, l'isoprène, le styrène, l'acrylonitrile, l'isobutylène, l'acétate de vinyle), le polyacrylate de butyle, ou leurs mélanges ; on peut également citer les élastomères silicones, les élastomères fonctionnalisés, par exemple par des groupements chimiques disposés tout le long de la chaîne macromoléculaire et/ou en une ou plusieurs de ses extrémités (par exemple par des fonctions susceptibles de réagir avec la surface de la silice) et les polymères halogénés. On peut mentionner les polyamides.

Le polymère (copolymère) peut être un polymère (copolymère) en masse, un latex de polymère (copolymère) ou bien une solution de polymère (copolymère) dans l'eau ou dans tout autre liquide dispersant approprié.

A titre d'élastomères diéniques, on peut mentionner par exemple les polybutadiènes (BR), les polyisoprènes (IR), les copolymères de butadiène, les copolymères d'isoprène, ou leurs mélanges, et en particulier les copolymères de styrène-butadiène (SBR, notamment ESBR (émulsion) ou SSBR (solution)), les copolymères d'isoprène-butadiène (BIR), les copolymères d'isoprène-styrène (SIR), les copolymères d'isoprène-butadiène-styrène (SBIR), les terpolymères éthylène-propylène-diène (EPDM) ainsi que les polymères fonctionnalisés associés (présentant par exemple des groupements polaires pendant ou en bout de chaine et pouvant interagir avec la silice).

On peut également citer le caoutchouc naturel (NR) et le caoutchouc naturel epoxydé (ENR).

Les compositions de polymère(s) peuvent être vulcanisées au soufre (on obtient alors des vulcanisats) ou réticulées notamment aux peroxydes ou autres systèmes de réticulation (par exemple diamines ou résines phénoliques).

En général, les compositions de polymère(s) comprennent en outre au moins un agent de couplage (silice/polymère) et/ou au moins un agent de recouvrement ; elles peuvent également comprendre, entre autres, un agent antioxydant.

On peut notamment utiliser comme agents de couplages, à titre d'exemples non limitatifs, des silanes polysulfurés, dits « symétriques » ou « asymétriques » ; on peut citer plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-(triméthoxysilyl)propyl) ou les polysulfures de bis(3-(triéthoxysilyl)propyl), tels que le tétrasulfure de triéthoxysilylpropyle. On peut également citer le tétrasulfure de monoéthoxydiméthylsilylpropyle. On peut également citer des silanes à fonction thiols masqués ou non.

L'agent de couplage peut être préalablement greffé sur le polymère.

Il peut être également employé à l'état libre (c'est-à-dire non préalablement greffé) ou greffé à la surface de la silice. Il en est de même de l'éventuel agent de recouvrement.

A l'agent de couplage peut éventuellement être associé un « activateur de couplage » approprié, c'est-à-dire un composé qui, mélangé avec cet agent de couplage, augmente l'efficacité de ce dernier.

La proportion en poids de silice dans la composition de polymère(s) peut varier dans une gamme assez large.

Elle représente habituellement 10 à 200 %, en particulier 20 à 150 %, notamment 20 à 80 % (par exemple 30 à 70 %) ou 80 à 120 % (par exemple 90 à 110 %), de la quantité du (des) polymère(s).

La silice obtenue par le procédé selon l'invention peut avantageusement constituer la totalité de la charge inorganique renforçante, et même la totalité de la charge renforçante, de la composition de polymère(s).

Cependant, à cette silice obtenue par le procédé selon l'invention peut être éventuellement associée au moins une autre charge renforçante, comme en particulier une silice hautement dispersible commerciale telle que par exemple la Z1165MP, la Z1115MP, une silice précipitée traitée (par exemple « dopée » à l'aide d'un cation comme l'aluminium) ; une autre charge inorganique renforçante telle que par exemple l'alumine, voire même une charge organique renforçante, notamment du noir de carbone (éventuellement recouvert d'une couche inorganique, par exemple de silice). La silice obtenue par le procédé selon l'invention constitue alors de préférence au moins 50 %, voire au moins 80 % en poids de la totalité de la charge renforçante.

On peut citer, comme exemples non limitatifs d'articles finis comprenant au moins une (en particulier à base) desdites compositions de polymère(s) décrites précédemment (notamment à base des vulcanisats mentionnés ci-dessus), les semelles de chaussures (de préférence en présence d'un agent de couplage (silice/polymère), par exemple le tétrasulfure de triéthoxysilylpropyle), les revêtements de sols, les barrières aux gaz, les matériaux ignifugeants et également les pièces techniques telles que les galets de téléphériques, les joints d'appareils électroménagers, les joints de conduites de liquides ou de gaz, les joints de système de freinage, les tuyaux (flexibles), les gaines (notamment les gaines de câbles), les câbles, les supports de moteur, les séparateurs de batterie, les bandes de convoyeur, les courroies de transmissions, ou, de préférence, les pneumatiques, en particulier les bandes de roulement de pneumatiques (notamment pour véhicules légers ou pour véhicules poids lourds (camions par exemple)).

Les exemples suivants illustrent l'invention sans toutefois en limiter la portée.

EXEMPLES

EXEMPLE 1

La suspension de silice précipitée utilisée est un slurry (bouillie) de silice, obtenu à l'issue de la réaction de précipitation lors du procédé de préparation de la silice Z1165MP.

La suspension de silice (1396 litres) est filtrée et lavée sur un filtre-presse puis est soumise à un compactage à une pression de 5,5 bars sur le même filtre. Le gâteau de silice qui en résulte présente un extrait sec de 23 % en poids.

Préalablement à l'opération de délitage, on prépare une solution d'acide succinique à 100 g/l par solubilisation de l'acide succinique sous agitation dans de l'eau (35 °C).

On fait subir au gâteau obtenu à l'étape de filtration une opération de délitage dans un réacteur fortement agité continu (pendant 3 heures environ) avec 2270 grammes de la solution d'aluminate de sodium (rapport pondéral $Al/SiO_2$ de 0,33 %).

Une fois le délitage effectué, on ajoute à une partie (303 litres) du gâteau délité, 9670 grammes de la solution d'acide succinique préalablement préparée (rapport pondéral acide succinique/$SiO_2$ de 1,15 %).

Cette partie traitée (ayant un extrait sec de 22 % en poids) du gâteau délité est ensuite séché au moyen d'un atomiseur à buses en pulvérisant le gâteau délité au travers d'une buse de 1,5 mm avec une pression de 25 bars pendant 50 minutes sous les conditions moyennes de débit et de températures suivantes :

Température d'entrée moyenne : 535 °C

Température de sortie moyenne : 155 °C

Débit moyen : 202 l/h.

Les caractéristiques de la silice S1 obtenue (sous forme de billes sensiblement sphériques) sont alors les suivantes :

| | |
|---|---|
| BET ($m^2/g$) | 147 |
| Teneur en acide polycarboxylique + carboxylate (C) (%) | 0,35 |
| Teneur en aluminium (Al) (%) | 0,30 |
| Rapport (R) | 1,3 |
| CTAB ($m^2/g$) | 151 |

(suite)

| | |
|---|---|
| $\gamma_s^d$ (mJ/m$^2$) | 33,2 |
| Reprise en eau (%) | 8,5 |
| $\emptyset_{50}$ ($\mu$m) après désagglomération aux ultra-sons | 2,7 |
| Fd après désagglomération aux ultra-sons | 18,9 |
| V2/V1 (%) | 56 |
| pH | 5,2 |

EXEMPLE 2 (Comparatif)

La suspension de silice précipitée utilisée est un gâteau de silice (ayant un extrait sec de 23 % en poids), obtenu à l'issue de l'étape de filtration lors du procédé de préparation de la silice Z1165MP.

Préalablement à l'opération de délitage, on prépare une solution d'acide maléique à 100 g/l par solubilisation dans de l'eau (à 35 °C), sous agitation, d'acide maléique.

On fait subir au gâteau obtenu à l'étape de filtration une opération de délitage dans un réacteur fortement agité continu (pendant 90 minutes environ) avec ajout au gâteau de 4400 grammes de la solution d'acide maléique à 100 g/l (rapport pondéral Acide maléique/SiO$_2$ de 1,0 %).

Ce gâteau délité (ayant un extrait sec de 22 % en poids) est ensuite séché au moyen d'un atomiseur à buses en pulvérisant le gâteau délité au travers d'une buse de 1,5 mm avec une pression de 25 bars sous les conditions moyennes de débit et de températures suivantes :

Température d'entrée moyenne : 577 °C

Température de sortie moyenne : 157 °C

Débit moyen : 220 l/h.

Les caractéristiques de la silice C1 obtenue (sous forme de billes sensiblement sphériques) sont alors les suivantes :

| | |
|---|---|
| BET (m$^2$/g) | 169 |
| Teneur en acide polycarboxylique + carboxylate (C) (%) | 0,19 |
| Teneur en aluminium (Al) (%) | < 0,05 |
| Rapport (R) | > 4,3 |
| CTAB (m$^2$/g) | 178 |
| $\gamma_s^d$ (mJ/m$^2$) | 51 |
| $\emptyset_{50}$ ($\mu$m) après désagglomération aux ultra-sons | 3,6 |
| Fd après désagglomération aux ultra-sons | 19,3 |
| V2/V1 (%) | 58 |
| pH | 3,8 |

EXEMPLE 3

Dans un mélangeur interne de type Brabender (380 ml), on prépare les compositions élastomériques dont la constitution, exprimée en partie en poids pour 100 parties d'élastomères (pce), est indiquée dans le tableau 1 ci-dessous :

Tableau I

| Composition | Témoin 1 | Composition 1 |
|---|---|---|
| SBR (1) | 103 | 103 |
| BR (1) | 25 | 25 |
| Silice 1 (2) | 80 | |
| Silice S1 (3) | | 80 |
| Agent de couplage (4) | 6,4 | 6,4 |
| Noir de carbone (N330) | 3,0 | 3,0 |
| Plastifiant (5) | 7 | 7 |
| ZnO | 2,5 | 2,5 |
| Acide stéarique | 2 | 2 |
| Antioxydant (6) | 1,9 | 1,9 |
| DPG (7) | 1,5 | 1,5 |
| CBS (8) | 2 | 2 |
| Soufre | 1,1 | 1,1 |

(1) SBR solution (Buna VSL5025-2 de la société Lanxess) avec 50+/-4% de motifs vinyl ; 25+/-2% de motifs styrène ; Tg voisin de -20°C ; 100 phr de SBR étendu avec 37,5+/-2,8 % en poids d'huile / BR (Buna CB 25 de la Société Lanxess) (2) Silice Z1165 MP de la Société Rhodia (3) Silice S1 obtenue par le procédé selon la présente invention (délitage avec addition d'aluminate de sodium, puis addition d'acide succinique après délitage (exemple 1 ci-dessus)) (4) TESPT (LUVOMAXX TESPT de la société LEHVOSS France sarl) (5) Nytex 4700 de la société Nynas (6) N-1,3-diméthylbutyl-N-phényl-para-phénylènediamine (Santoflex 6-PPD de la société Flexsys) (7) Diphénylguanidine (Rhénogran DPG-80 de la société RheinChemie) (8) N-cyclohexyl-2-benzothiazyl-sulfénamide (Rhénogran CBS-80 de la société RheinChemie)

La silice Z1165 MP présente les caractéristiques suivantes :

| | |
|---|---|
| BET (m$^2$/g) | 161 |
| Teneur en acide polycarboxylique + carboxylate (C) (%) | 0,00 |
| Teneur en aluminium (Al) (%) | 0,30 |
| Rapport (R) | 0 |
| CTAB (m$^2$/g) | 155 |
| $\gamma_s^d$ (mJ/m$^2$) | 48,7 |
| Reprise en eau (%) | 9,4 |

Procédé de préparation des compositions élastomériques :

Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Brabender (capacité de 380 ml). Le coefficient de remplissage est de 0,6. La température initiale et la vitesse des rotors sont fixées à chaque fois de manière à atteindre des températures de tombée de mélange voisines de 140-160°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). La durée de cette passe est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

Chaque mélange final est ensuite calandré sous la forme de plaques d'épaisseur 2-3 mm.

Sur ces mélanges obtenus dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

- Viscosité des mélanges crus :

La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau II. Le test est réalisé après confection des mélanges crus puis après un vieillissement durant 3 semaines à une température de 23 +/- 3°C.

Tableau II

| Compositions | | | Témoin 1 | Composition 1 |
|---|---|---|---|---|
| ML (1+4) - 100°C | Initial | | 79 | 74 |
| Relaxation Mooney | Initial | | 0,312 | 0,343 |
| ML (1+4) - 100°C | Après 3 semaines (23 +/- 3°C) | | 93 | 83 |
| Relaxation Mooney | Après 3 semaines (23 +/- 3°C) | | 0,258 | 0,307 |

On constate que la silice S1 (Composition 1) permet une réduction conséquente de la viscosité à cru initiale, par rapport à la valeur du mélange témoin.

On constate également que la silice S1 (Composition 1) permet de conserver l'avantage en viscosité à cru réduite, par rapport à la valeur du mélange témoin, après 3 semaines de stockage.

Ce type de comportement dans le temps est très utile pour l'homme de l'art dans le cas de la mise en oeuvre de mélanges caoutchouc contenant de la silice.

Rhéométrie des compositions :

Les mesures sont réalisées sur les compositions à l'état cru. On a porté dans le tableau III les résultats concernant le test de rhéologie qui est conduit à 160°C au moyen d'un rhéomètre ODR MONSANTO selon la norme NF ISO 3417.

Selon ce test, la composition à tester est placée dans la chambre d'essai régulée à la température de 160°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

- le couple minimum (Cmin) qui reflète la viscosité de la composition à la température considérée ;
- le couple maximum (Cmax) ;
- le delta-couple ($\Delta C = Cmax - Cmin$) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation) ;
- et le temps de grillage TS2 correspondant au temps nécessaire pour avoir une remontée de 2 points au dessus du couple minimum à la température considérée (160°C) et qui reflète le temps pendant lequel il est possible de mettre en oeuvre les mélanges crus à cette température sans avoir d'initiation de la vulcanisation (le mélange durcit à partir de TS2).

Les résultats obtenus sont indiqués dans le tableau III.

Tableau III

| Compositions | Témoin 1 | Composition 1 |
|---|---|---|
| Cmin (dN.m) | 17,0 | 15,7 |
| Cmax (dN.m) | 56,0 | 61,9 |
| Delta couple (dN.m) | 39,0 | 46,2 |
| TS2 (min) | 5,8 | 6,2 |
| T98 (min) | 26,2 | 26,4 |

On constate que la composition issue de l'invention (Composition 1) présente un ensemble satisfaisant de propriétés rhéologiques.

En particulier, tout en ayant une viscosité à cru réduite, elle présente une valeur de couple minimum plus faible et une valeur de couple maximum plus élevée, que celles de la composition témoin, ce qui traduit une plus grande facilité de mise en oeuvre du mélange préparé.

L'utilisation de la silice S1 (Composition 1) permet de réduire la viscosité minimale (signe d'une amélioration de la viscosité à cru) par rapport au mélange témoin sans pénaliser le comportement en vulcanisation.

Propriétés mécaniques des vulcanisats :

Les mesures sont réalisées sur les compositions vulcanisées à l'optimum (T98) pour une température de 160°C.

Les essais de traction uni-axiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction sont exprimés en MPa. Il est possible de déterminer un indice de renforcement (I.R.) égal au rapport entre les modules à 300 % de déformation et le module à 100% de déformation.

La mesure de dureté Shore A des vulcanisats est réalisée selon les indications de la norme ASTM D 2240. La valeur donnée est mesurée à 15 secondes.

Les propriétés mesurées sont rassemblées dans le tableau IV.

Tableau IV

| Compositions | Témoin 1 | Composition 1 |
|---|---|---|
| Module 10 % (Mpa) | 0,6 | 0,7 |
| Module 100 % (Mpa) | 2,1 | 2,4 |
| Module 300 % (Mpa) | 11,6 | 13,4 |
| I.R. | 5,6 | 5,7 |
| Dureté Shore A-15s (pts) | 55 | 55 |

On constate que la composition issue de l'invention (Composition 1) présente un compromis satisfaisant de propriétés mécaniques par rapport à ce qui est obtenu avec la composition Témoin 1.

La composition 1 présente ainsi des modules 10 % et 100 % relativement faibles et un module 300 % relativement élevé, d'où un bon indice de renforcement.

L'utilisation d'une silice S1 (Composition 1) permet d'obtenir un niveau de renforcement satisfaisant par rapport au mélange témoin.

Propriétés dynamiques des vulcanisats :

Les propriétés dynamiques sont mesurées sur un viscoanalyseur (Metravib VA3000), selon la norme ASTM D5992.

Les valeurs de facteur de perte (tan $\delta$) et de module complexe en compression dynamique (E*) sont enregistrées sur des échantillons vulcanisés (éprouvette cylindrique de section 95 mm$^2$ et de hauteur 14 mm). L'échantillon est soumis au départ à une pré-déformation de 10% puis à une déformation sinusoïdale en compression alternée de plus ou moins 2%. Les mesures sont réalisées à 60°C et à une fréquence de 10 Hz.

Les résultats, présentés dans le tableau V, sont le module complexe en compression (E* - 60°C - 10 Hz) et le facteur de perte (tan δ - 60°C - 10 Hz).

Les valeurs du facteur de perte (tan et d'amplitude de module élastique en cisaillement dynamique (ΔG') sont enregistrées sur des échantillons vulcanisés (éprouvette parallélépipédique de section 8 mm$^2$ et de hauteur 7 mm). L'échantillon est soumis à une déformation sinusoïdale en double cisaillement alternée à une température de 40°C et à une fréquence de 10 Hz. Les processus de balayage en amplitude de déformations s'effectuent selon un cycle aller-retour, allant de 0,1% à 50% puis retour de 50% à 0,1%.

Les résultats présentés dans le tableau V, sont issus du balayage en amplitude de déformations au retour et concernent la valeur maximale du facteur de perte (tan δ max retour - 40°C - 10 Hz) ainsi que l'amplitude du module élastique (ΔG' - 40°C - 10 Hz) entre les valeurs à 0,1% et 50% de déformation (effet Payne).

Tableau V

| Références | Témoin 1 | Composition 1 |
|---|---|---|
| E* - 60°C - 10 Hz (MPa) | 5,8 | 5,5 |
| Tan δ - 60°C - 10 Hz | 0,125 | 0,117 |
| ΔG' - 40°C - 10 Hz (MPa) | 1,4 | 1,2 |
| Tan δ max retour - 40°C - 10 Hz | 0,190 | 0,179 |

L'utilisation d'une silice S1 (Composition 1) permet d'améliorer la valeur maximale du facteur de perte et l'amplitude du module élastique ou effet Payne par rapport au mélange témoin.

L'examen des différents tableaux II à V montre que la Composition 1 permet d'obtenir un bon compromis mise en oeuvre / renforcement / propriétés hystérétiques par rapport au mélange témoin et notamment un gain conséquent en viscosité à cru qui reste stable au stockage dans le temps.

EXEMPLE 4

Dans un mélangeur interne de type Brabender (380 ml), on prépare les compositions élastomériques dont la constitution, exprimée en partie en poids pour 100 parties d'élastomères (pce), est indiquée dans le tableau VI ci-dessous :

Tableau VI

| Compositions | Témoin 2 | Témoin 3 | Composition 2 |
|---|---|---|---|
| NR (1) | 100 | 100 | 100 |
| Silice 1 (2) | 55 | | |
| Silice C1 (3) | | 55 | |
| Silice S1 (4) | | | 55 |
| Agent de couplage (5) | 4,4 | 4,4 | 4,4 |
| ZnO | 3 | 3 | 3 |
| Acide stéarique | 2,5 | 2,5 | 2,5 |
| Antioxydant 1 (6) | 1,5 | 1,5 | 1,5 |
| Antioxydant 2 (7) | 1,0 | 1,0 | 1,0 |
| Noir de carbone (N330) | 3,0 | 3,0 | 3,0 |
| CBS (8) | 1,7 | 1,7 | 1,7 |

(suite)

| Compositions | Témoin 2 | Témoin 3 | Composition 2 |
|---|---|---|---|
| Soufre | 1,5 | 1,5 | 1,5 |

(1) Caoutchouc naturel CVR CV60 (fourni par la société Safic-Alcan).
(2) Silice Z1165MP de la Société Rhodia
(3) Silice C1 (délitage avec addition d'acide maléique (exemple 2 - comparatif))
(4) Silice S1 obtenue par le procédé selon la présente invention (délitage avec addition d'aluminate de sodium, puis addition d'acide succinique après délitage (exemple 1 ci-dessus))
(5) TESPT (LUVOMAXX TESPT de la société LEHVOSS France sarl).
(6) N-1,3-diméthylbutyl-N-phényl-para-phénylènediamine (Santoflex 6-PPD de la société Flexsys).
(7) 2,2,4-trimethyl-1H-quinoline (Permanax TQ de la société Flexsys)
(8) N-cyclohexyl-2-benzothiazyl-sulfénamide (Rhénogran CBS-80 de la société RheinChemie)

Procédé de préparation des compositions élastomériques :

Le procédé de préparation des compositions de caoutchouc est conduit en deux phases de préparation successives. Une première phase consiste dans une phase de travail thermomécanique à haute température. Elle est suivie d'une seconde phase de travail mécanique à des températures inférieures à 110°C. Cette phase permet l'introduction du système de vulcanisation.

La première phase est réalisée au moyen d'un appareil de mélangeage, type mélangeur interne de marque Brabender (capacité de 380 ml). Le coefficient de remplissage est de 0,6. La température initiale et la vitesse des rotors sont fixées à chaque fois de manière à atteindre des températures de tombée de mélange voisines de 140-160°C.

Décomposée ici en deux passes, la première phase permet d'incorporer dans une première passe, les élastomères puis la charge renforçante (introduction fractionnée) avec l'agent de couplage et l'acide stéarique. Pour cette passe, la durée est comprise entre 4 et 10 minutes.

Après refroidissement du mélange (température inférieure à 100°C), une seconde passe permet d'incorporer l'oxyde de zinc et les agents protecteurs/antioxydants (6-PPD notamment). Pour cette passe, la durée est comprise entre 2 et 5 minutes.

Après refroidissement du mélange (température inférieure à 100°C), la seconde phase permet l'introduction du système de vulcanisation (soufre et accélérateurs, comme le CBS). Elle est réalisée sur un mélangeur à cylindres, préchauffé à 50°C. La durée de cette phase est comprise entre 2 et 6 minutes.

La composition finale est ensuite calandrée sous la forme de plaques d'épaisseur 2-3 mm.

Sur ces mélanges dits crus, une évaluation de leurs propriétés rhéologiques permet d'optimiser la durée et la température de vulcanisation.

Ensuite, les propriétés mécaniques et dynamiques des mélanges vulcanisés à l'optimum de cuisson (T98) sont mesurées.

Propriétés rhéologiques

- Viscosité des mélanges crus :

La consistance Mooney est mesurée sur les compositions à l'état cru à 100°C au moyen d'un rhéomètre MV 2000 ainsi que la détermination du taux de relaxation de contrainte Mooney selon la norme NF ISO 289.

La valeur du couple lue au bout de 4 minutes après un préchauffage d'une minute (Mooney Large (1+4) - à 100°C) est indiquée dans le tableau VII. Le test est réalisé après confection des mélanges crus puis après un vieillissement durant 10 jours à une température de 23 +/- 3°C.

Tableau VII

| Compositions | | Témoin 2 | Témoin 3 | Composition 2 |
|---|---|---|---|---|
| ML (1+4) - 100°C | Initial | 59 | 56 | 53 |
| Relaxation Mooney | Initial | 0,392 | 0,385 | 0,395 |
| ML (1+4) - 100°C | Après 11 jours (23 +/- 3°C) | 65 | 59 | 57 |
| Relaxation Mooney | Après 11 jours (23 +/- 3°C) | 0,380 | 0,399 | 0,384 |

On constate que la silice S1 (Composition 2) permet une réduction de la viscosité à cru initiale, par rapport au mélange témoin 2 et au mélange témoin 3.

On constate également que la silice S1 (Composition 2) contenant de l'acide succinique montre une performance accrue en terme de réduction de la viscosité à cru par rapport au mélange témoin 2 et au mélange témoin 3.

On observe aussi que l'utilisation de la silice S1 (Composition 2) permet de conserver l'avantage en viscosité à cru réduite, par rapport au mélange témoin 2 et au mélange témoin 3, après 11 jours de stockage.

Ce type de comportement dans le temps est très utile pour l'homme de l'art dans le cas de la mise en oeuvre de mélange caoutchouc contenant de la silice.

- Rhéométrie des compositions :

Les mesures sont réalisées sur les compositions à l'état cru. On a porté dans le tableau VIII les résultats concernant le test de rhéologie qui est conduit à 150°C au moyen d'un rhéomètre ODR MONSANTO selon la norme NF ISO 3417.

Selon ce test, la composition à tester est placée dans la chambre d'essai régulée à la température de 150°C durant 30 minutes, et on mesure le couple résistant, opposé par la composition, à une oscillation de faible amplitude (3°) d'un rotor biconique inclus dans la chambre d'essai, la composition remplissant complètement la chambre considérée.

A partir de la courbe de variation du couple en fonction du temps, on détermine :

- le couple minimum (Cmin) qui reflète la viscosité de la composition à la température considérée ;
- le couple maximum (Cmax) ;
- le delta-couple ($\Delta C = Cmax - Cmin$) qui reflète le taux de réticulation entraîné par l'action du système de réticulation et, s'il y a lieu, des agents de couplage ;
- le temps T98 nécessaire pour obtenir un état de vulcanisation correspondant à 98 % de la vulcanisation complète (ce temps est pris comme optimum de vulcanisation).

Les résultats obtenus sont indiqués dans le tableau VIII.

Tableau VIII

| Compositions | Témoin 2 | Témoin 3 | Composition 2 |
|---|---|---|---|
| Cmin (dN.m) | 13,6 | 13,5 | 11,8 |
| Cmax (dN.m) | 71,6 | 69,4 | 77,3 |
| Delta couple (dN.m) | 58 | 56 | 66 |
| T98 (min) | 25,2 | 26,9 | 25,0 |

On constate que la composition issue de l'invention (Composition 2) présente un ensemble satisfaisant de propriétés rhéologiques.

En particulier, tout en ayant une viscosité à cru réduite, elle présente une valeur de couple minimum plus faible et une valeur de couple maximum plus élevée, que celles du mélange témoin 2 et au mélange témoin 3, ce qui traduit une plus grande facilité de mise en oeuvre du mélange préparé.

L'utilisation de la silice S1 (Composition 2) permet de réduire la viscosité minimale (couple minimale Cmin faible, signe d'une amélioration de la viscosité à cru) par rapport au mélange témoin 2 et au mélange témoin 3 sans pénaliser le comportement en vulcanisation.

Propriétés mécaniques des vulcanisats :

Les mesures sont réalisées sur les compositions vulcanisées à l'optimum (T98) pour une température de 150°C.

Les essais de traction uniaxiale sont réalisés conformément aux indications de la norme NF ISO 37 avec des éprouvettes de type H2 à une vitesse de 500 mm/min sur un appareil INSTRON 5564. Les modules x %, correspondant à la contrainte mesurée à x % de déformation en traction, et la résistance à la rupture sont exprimés en MPa ; l'allongement à la rupture est exprimé en %.

La mesure de dureté Shore A des vulcanisats est réalisée selon les indications de la norme ASTM D 2240. La valeur donnée est mesurée à 15 secondes.

Les propriétés mesurées sont rassemblées dans le tableau IX.

Tableau IX

| Compositions | Témoin 2 | Témoin 3 | Composition 2 |
|---|---|---|---|
| Module 10 % (Mpa) | 0,6 | 0,5 | 0,6 |
| Module 300 % (Mpa) | 12,3 | 12,6 | 14,0 |
| Résistance rupture (Mpa) | 26,0 | 26,8 | 28,8 |
| Allongement à la rupture (%) | 532 | 521 | 541 |
| I.R. | 4,9 | 5,2 | 4,7 |
| Dureté Shore A-15s (pts) | 59 | 55 | 60 |

On constate que la composition issue de l'invention (Composition 2) présente un compromis satisfaisant de propriétés mécaniques par rapport à ce qui est obtenu avec le mélange témoin 2 et au mélange témoin 3. Notamment, elle présente une meilleure résistance à la rupture et un allongement à la rupture plus élevé par rapport au mélange témoin 2 et au mélange témoin 3.

La composition 2 présente ainsi un module 10 % relativement faible et un module 300 % relativement élevé.

L'utilisation d'une silice S1 (Composition 2) permet d'obtenir un bon niveau de renforcement.

Propriétés dynamiques des vulcanisats :

Les propriétés dynamiques sont mesurées sur un viscoanalyseur (Metravib VA3000), selon la norme ASTM D5992.

Les valeurs de facteur de perte (tan et de module complexe en compression dynamique (E*) sont enregistrées sur des échantillons vulcanisés (éprouvette cylindrique de section 95 mm$^2$ et de hauteur 14 mm). L'échantillon est soumis au départ à une prédéformation de 10% puis à une déformation sinusoïdale en compression alternée de plus ou moins 2%. Les mesures sont réalisées à 60°C et à une fréquence de 10 Hz.

Les résultats, présentés dans le tableau X, sont le module complexe en compression (E* - 60°C - 10 Hz) et le facteur de perte (tan $\delta$ - 60°C - 10 Hz).

Les valeurs du facteur de perte (tan sont enregistrées sur des échantillons vulcanisés (éprouvette parallélépipédique de section 8 mm$^2$ et de hauteur 7 mm). L'échantillon est soumis à une déformation sinusoïdale en double cisaillement alternée à une température de 60°C et à une fréquence de 10 Hz. Les processus de balayage en amplitude de déformations s'effectuent selon un cycle aller-retour, allant de 0,1% à 50% puis retour de 50% à 0,1%.

Les résultats présentés dans le tableau X, sont issus du balayage en amplitude de déformations au retour et concernent la valeur maximale du facteur de perte (tan $\delta$ max retour - 60°C - 10 Hz).

Tableau X

| Compositions | Témoin 2 | Témoin 3 | Composition 2 |
|---|---|---|---|
| E* - 60°C - 10 Hz (MPa) | 6,5 | 5,6 | 6,7 |
| Tan $\delta$ - 60°C - 10 Hz | 0,125 | 0,118 | 0,104 |
| Tan $\delta$ max retour - 60°C - 10 Hz | 0,138 | 0,135 | 0,128 |

L'utilisation d'une silice S1 (Composition 2) permet d'améliorer la valeur maximale du facteur de perte en compression dynamique tout comme le facteur de perte Tan $\delta$ max retour par rapport au mélange témoin 2 et au mélange témoin 3.

L'examen des différents tableaux VII à X montre que la composition conforme à l'invention (Composition 2) permet d'obtenir un bon compromis mise en oeuvre / renforcement / propriétés hystérétiques à 60°C par rapport au mélange témoin 2 et au mélange témoin 3. La viscosité à cru du mélange comprenant la silice de la présente invention évolue très peu au stockage dans le temps.

**Revendications**

1. Procédé de préparation d'une silice précipitée, dans lequel :

- on fait réagir au moins un silicate avec au moins un agent acidifiant, de manière à obtenir une suspension de silice précipitée,
- on filtre ladite suspension de silice précipitée, de manière à obtenir un gâteau de filtration,
- on soumet ledit gâteau de filtration à une opération de délitage comprenant l'addition d'un composé de l'aluminium,
- après l'opération de délitage, on procède de préférence à une étape de séchage,

**caractérisé en ce qu'**on ajoute au gâteau de filtration, de l'acide succinique après l'addition du composé d'aluminium.

2. Procédé de préparation d'une silice précipitée selon la revendication 1 **caractérisé en ce qu'**il comprend les étapes suivantes :

- on réalise la réaction de précipitation de la manière suivante :

(i) on forme un pied de cuve initial comportant au moins une partie de la quantité totale du silicate engagé dans la réaction et un électrolyte, la concentration en silicate (exprimée en $SiO_2$) dans ledit pied de cuve initial étant inférieure à 100 g/L et, de préférence, la concentration en électrolyte dans ledit pied de cuve initial étant inférieure à 19 g/L,
(ii) on ajoute l'agent acidifiant audit pied de cuve jusqu'à l'obtention d'une valeur du pH du milieu réactionnel d'au moins 7,0, en particulier comprise entre 7,0 et 8,5,
(iii) on ajoute au milieu réactionnel de l'agent acidifiant, et, le cas échéant simultanément la quantité restante du silicate,

- on filtre la suspension de silice obtenue,
- on soumet le gâteau de filtration obtenu à l'issue de la filtration à une opération de délitage comprenant l'addition d'un composé de l'aluminium,
- on sèche le gâteau de filtration ainsi obtenu, de préférence présentant un taux de matière sèche d'au plus 25 % en poids,

ledit procédé étant **caractérisé en ce qu'**on ajoute au gâteau de filtration, soit au cours de l'opération de délitage après l'addition du composé d'aluminium, soit après l'opération de délitage et avant l'étape de séchage, de l'acide succinique.

3. Procédé selon l'une des revendications 1 et 2, dans lequel l'acide succinique est ajouté après l'opération de délitage au gâteau de filtration délité.

4. Procédé selon l'une des revendications 1 et 2, dans lequel, au cours de l'opération de délitage, le composé d'aluminium est ajouté au gâteau de filtration préalablement à l'ajout de l'acide succinique.

5. Procédé selon l'une des revendications 1 à 4, dans lequel une partie ou la totalité de l'acide succinique employé est sous forme d'anhydride, d'ester, de sel (carboxylate) de métal alcalin ou de sel (carboxylate) d'ammonium.

6. Procédé selon l'une des revendications 1 à 5, dans lequel le composé de l'aluminium est un aluminate de métal alcalin.

7. Procédé selon l'une des revendications 1 à 6, dans lequel la quantité de composé de l'aluminium utilisé est telle que le rapport composé de l'aluminium/quantité de silice exprimée en $SiO_2$ contenue dans le gâteau de filtration est compris entre 0,20 et 0,50 % en poids, de préférence entre 0,25 et 0,45 % en poids.

8. Procédé selon l'une des revendications 1 à 7, dans lequel la quantité d'acide succinique employée est telle que le rapport acide succinique/quantité de silice exprimée en $SiO_2$ contenue dans le gâteau de filtration est compris entre 0,75 et 2 % en poids, de préférence entre 1 et 1,75 % en poids, en particulier entre 1,1 et 1,5 % en poids.

**Patentansprüche**

1. Verfahren zur Herstellung einer Fällungskieselsäure, bei dem man:

- mindestens ein Silikat mit mindestens einem Ansäuerungsmittel umsetzt, wobei man eine Kieselsäuresuspension erhält,

- die Kieselsäuresuspension filtriert, wobei man einen Filterkuchen erhält,
- den Filterkuchen einem Aufbrechvorgang unterwirft, bei dem eine Aluminiumverbindung zugesetzt wird,
- nach dem Aufbrechvorgang vorzugsweise einen Trocknungsschritt durchführt,

**dadurch gekennzeichnet, dass** man nach der Zugabe der Aluminiumverbindung Bernsteinsäure zu dem Filterkuchen gibt.

2. Verfahren zur Herstellung einer Fällungskieselsäure nach Anspruch 1, **dadurch gekennzeichnet, dass** es die folgenden Schritte umfasst:

- man führt die Fällungsreaktion folgendermaßen durch:

(i) man bildet eine Vorlage, die mindestens einen Teil der Gesamtmenge des an der Reaktion beteiligten Silikats und einen Elektrolyt umfasst, wobei die Konzentration von Silikat (ausgedrückt als $SiO_2$) in der Vorlage weniger als 100 g/L beträgt und vorzugsweise die Konzentration von Elektrolyt in der Vorlage weniger als 19 g/L beträgt,
(ii) man gibt das Ansäuerungsmittel bis zum Erhalt eines pH-Werts des Reaktionsmediums von mindestens 7,0, insbesondere zwischen 7,0 und 8,5, zu der Vorlage,
(iii) man gibt das Ansäuerungsmittel und gegebenenfalls gleichzeitig die Restmenge des Silikats zum Reaktionsmedium,

- man filtriert die erhaltene Kieselsäuresuspension,
- man unterwirft den Filterkuchen am Ende der Filtration einem Aufbrechvorgang, bei dem eine Aluminiumverbindung zugesetzt wird,
- man trocknet den so erhaltenen Filterkuchen, der vorzugsweise einen Feststoffgehalt von mehr als 25 Gew.-% aufweist,

wobei das Verfahren **dadurch gekennzeichnet ist, dass** man entweder während des Aufbrechvorgangs nach der Zugabe der Aluminiumverbindung oder nach dem Aufbrechvorgang und vor dem Trocknungsschritt Bernsteinsäure zu dem Filterkuchen gibt.

3. Verfahren nach einem der Ansprüche 1 und 2, bei dem die Bernsteinsäure nach dem Aufbrechvorgang zu dem aufgebrochenen Filterkuchen gegeben wird.

4. Verfahren nach einem der Ansprüche 1 und 2, bei dem während des Aufbrechvorgangs die Aluminiumverbindung vor der Zugabe der Bernsteinsäure zu dem Filterkuchen gegeben wird.

5. Verfahren nach einem der Ansprüche 1 bis 4, bei dem die Bernsteinsäure teilweise oder ganz in Anhydrid-Form, Ester-Form, Alkalimetallsalz-Form (Carboxylat-Form) oder Ammoniumsalz-Form (Carboxylat-Form) eingesetzt wird.

6. Verfahren nach einem der Ansprüche 1 bis 5, bei dem es sich bei der Aluminiumverbindung um ein Alkalimetallaluminat handelt.

7. Verfahren nach einem der Ansprüche 1 bis 6, bei dem die verwendete Menge an Aluminiumverbindung derart beschaffen ist, dass das Verhältnis von Aluminiumverbindung zu Kieselsäure, ausgedrückt als $SiO_2$, in dem Filterkuchen zwischen 0,20 und 0,50 Gew.-%, vorzugsweise zwischen 0,25 und 0,45 Gew.-%, liegt.

8. Verfahren nach einem der Ansprüche 1 bis 7, bei dem die eingesetzte Menge an Bernsteinsäure derart beschaffen ist, dass das Verhältnis von Bernsteinsäure zu Kieselsäure, ausgedrückt als $SiO_2$, in dem Filterkuchen zwischen 0,75 und 2 Gew.-%, vorzugsweise zwischen 1 und 1,75 Gew.-%, insbesondere zwischen 1,1 und 1,5 Gew.-%, liegt.

**Claims**

1. Process for the preparation of a precipitated silica, in which:

- at least one silicate is reacted with at least one acidifying agent, so as to obtain a suspension of precipitated silica,
- the said suspension of precipitated silica is filtered, so as to obtain a filtration cake,
- the said filtration cake is subjected to a disintegrating operation comprising the addition of an aluminium compound,

- after the disintegrating operation, a drying step is preferably carried out,

**characterized in that**, after the addition of the aluminium compound, succinic acid is added to the filtration cake.

2. Process for the preparation of a precipitated silica according to Claim 1, **characterized in that** it comprises the following steps:

- the precipitation reaction is carried out in the following way:

(i) an initial vessel heel comprising at least a portion of the total amount of silicate involved in the reaction and an electrolyte is formed, the concentration of silicate (expressed as $SiO_2$) in the said initial vessel heel being less than 100 g/l and, preferably, the concentration of electrolyte in the said initial vessel heel being less than 19 g/l,

(ii) the acidifying agent is added to the said vessel heel until a value of the pH of the reaction medium of at least 7.0, in particular of between 7.0 and 8.5, is obtained,

(iii) acidifying agent and, if appropriate, simultaneously the remaining amount of the silicate are added to the reaction medium,

- the silica suspension obtained is filtered,

- the filtration cake obtained on conclusion of the filtration is subjected to a disintegrating operation comprising the addition of an aluminium compound,

- the filtration cake thus obtained, preferably exhibiting a solids content of at most 25% by weight, is dried,

the said process being **characterized in that** succinic acid is added to the filtration cake, either during the disintegrating operation after the addition of the aluminium compound or after the disintegrating operation and before the drying step.

3. Process according to either of Claims 1 and 2, in which the succinic acid is added after the disintegrating operation to the disintegrated filtration cake.

4. Process according to either of Claims 1 and 2, in which, during the disintegrating operation, the aluminium compound is added to the filtration cake prior to the addition of the succinic acid.

5. Process according to one of Claims 1 to 4, in which a portion or all of the succinic acid employed is in the anhydride, ester, alkali metal salt (carboxylate) or ammonium salt (carboxylate) form.

6. Process according to one of Claims 1 to 5, in which the aluminium compound is an alkali metal aluminate.

7. Process according to one of Claims 1 to 6, in which the amount of aluminium compound used is such that the ratio of aluminium compound to amount of silica expressed as $SiO_2$ present in the filtration cake is between 0.20% and 0.50% by weight, preferably between 0.25% and 0.45% by weight.

8. Process according to one of Claims 1 to 7, in which the amount of succinic acid employed is such that the ratio of succinic acid to amount of silica expressed as $SiO_2$ present in the filtration cake is between 0.75% and 2% by weight, preferably between 1% and 1.75% by weight, in particular between 1.1% and 1.5% by weight.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2886285 A1

- EP 735088 A1

**Littérature non-brevet citée dans la description**

- **DE BRUNAUER - EMMET.** *The Journal of the American Chemical Society,* Février 1938, vol. 60, 309

- **DORRIS ; GRAY.** *J. Colloid Interface Sci.,* vol. 77 (180), 353-362